# EUROPÄISCHE PATENTANMELDUNG

(11) **EP 0 793 325 A2**
(43) Veröffentlichungstag der Anmeldung: **03.09.1997**
(21) Anmeldenummer: 97102701.6
(22) Anmeldetag: 19.02.1997
(51) Int. Cl.: H02J 1/00

(54) **Schaltungsanordnung zur Bereitstellung einer Betriebsspannung für eine Mehrzahl von vorzugsweise steckbaren Baueinheiten aus einer gemeinsamen Betriebsspannungsquelle**

(30) Priorität: 27.02.1996 DE 19607359
(71) Anmelder: SIEMENS AKTIENGESELLSCHAFT, 80333 München (DE)
(72) Erfinder: Prey, Gerhard, Ing., 82223 Eichenau (DE)

(57) **Zusammenfassung**

Es besteht das Problem, daß beim Anschalten weiterer Baueinheiten (SLM0 bis SLM7) oder beim Wiederanschalten von Baueinheiten nach einer Reparatur oder einem Austausch während des Betriebs der Gesamtanordnung die von der gemeinsamen Betriebsspannungsquelle (DCC) gelieferte Betriebsspannung unter einen Wert absinken kann, bei dem der ordnungsgemäße Betrieb der schon angeschalteten Baueinheiten nicht mehr gewährleistet ist. Zur Abhilfe ist die Möglichkeit geschaffen, in der Zuschaltesituation die Betriebsspannung soweit zu erhöhen, daß trotz des erwähnten Spannungseinbruchs eine noch über dem zulässigen Minimalwert liegende Spannung herrscht. Die Erhöhung kann gezielt durch eine vor dem Zuschalten vorgenommene Schaltmaßnahme oder automatisch ausgelöst durch den Zuschaltevorgang herbeigeführt werden.

## Beschreibung

Die Erfindung betrifft eine Schaltungsanordnung zur Bereitstellung einer Betriebsspannung für eine Mehrzahl von vorzugsweise steckbaren Baueinheiten aus einer gemeinsamen Betriebsspannungsquelle.

Bei solchen Baueinheiten kann es sich beispielsweise um Teilnehmeranschlußschaltungen oder Gruppen solcher Teilnehmeranschlußschaltungen von Fernsprechvermittlungsanlagen handeln, die von einem gemeinsamen Spannngswandler mit Betriebsspannungen von in diesem Fall 5 V versorgt werden.

Hier wie auch in anderen Anwendungsfällen muß gefordert werden, daß ein Wechsel oder ein Dazuschalten von Baueinheiten möglich ist, ohne daß der Betrieb der übrigen Baueinheiten gestört wird. Ein solches Zuschalten ist gerade bei dem vorstehend angesprochenen Anwendungsfall deswegen nicht unproblematisch, weil die Baueinheiten unter anderem auch Kondensatoren enthalten, so daß im ersten Augenblick des Anschaltens durch Aufladevorgänge eine erhöhte Belastung der Betriebsspannung entsteht. Da die Stromergiebigkeit der Spannungswandler nur begrenzt und auch die Zuleitung zu den Spannungswandlern nicht beliebig niederohmig sind und eine schnelle Ausreglung des Stromstoßes nicht ohne weiteres vorgenommen werden kann, ist in solchen Fallen ein Absinken der Betriebsspannung zu erwarten. Typische Werte für solche Spannungseinbrüche liegen im Bereich von 0,3 bis 0,7 V bei Versorgungsspannungswerten von 5 V, wobei die Zeitdauer im µ/s-Bereich liegt. Da die in den erwähnten Teilnehmeranschlußschaltungen verwendeten Schaltkreise nur im Bereich von 4,5 bis 5,5 V sicher arbeiten, sind Störungen des Betriebs der Baueinheiten nicht auszuschließen. Eine bekannte Möglichkeit zur Lösung dieses Problems besteht darin, die Baueinheiten mit einem sogenannten voreilenden Kontaktstift zu versehen, über den beim Einstecken eine Sonderspannung angelegt wird bevor es zum Anlegen der eigentlichen Betriebsspannung kommt, die die Kondensatoren der Baueinheit verzögert auflädt. Die Sonderspannung wird von der normalen Betriebsspannung abgeleitet und über eine zentral vorgesehene Induktivität zur Begrenzung des Ladungsstoßes zugeführt.

Auf der Baueinheit selbst ist mit Hilfe einer Diode eine Entkopplung der erwähnten Sonderspannung der Standard-Betriebsspannung vorgesehen.

Eine solche Lösung ist zum einen durch den Bauteileaufwand nachteilig, der für die Sonderkontakte, die zentrale Spule sowie die Entkopplungsdioden entsteht.

Sofern eine Entkopplungsdiode defekt, also kurzgeschlossen oder unterbrochen ist, kommt es zu unerwünschten Wirkungen. Selbst bei Baueinheiten, die gegen die erwähnten Spannungseinbrüche unempfindlich wären, solche Spannungseinbrüche aber verursachen, kann auf die erwähnten individuellen Maßnahmen nicht verzichtet werden, wenn insgesamt eine Mischung mit Baueinheiten stattfinden soll, bei denen eine Empfindlichkeit gegen Betriebsspannungseinbrüche vorliegt.

Die Aufgabe der Erfindung besteht daher darin, eine Schaltungsanordnung der eingangs genannten Art so auszugestalten, daß bei der Vermeidung des geschilderten Problems die geschilderten Nachteile der bekannten Schaltungsanordnung nicht auftreten.

Die lösungsgemäßen Merkmale sind im Kennzeichen des Patentanspruchs 1 angegeben. Es sind demnach Schaltmittel vorgesehen, durch die veranlaßt wird, daß die gemeinsame Betriebsspannungsquelle vorübergehend wahrend einer für das Auswechseln oder Hinzufügen von Baueinheiten vorgesehenen Zeitspanne an sämtliche der zu versorgenden Baueinheiten eine gegenüber dem Normalwert erhöhte Betriebsspannung liefert. Bei Absinken der Betriebsspannung aufgrund des Aufladens der Kondensatoren hinzugekommener Baueinheiten hat die Betriebsspannung dann immer noch einen Wert, der einen ordnungsgemäßen Betrieb sämtlicher Baueinheiten sicherstellt. Individuelle Schaltmaßnahmen wie voreilende Kontaktstifte und Entkopplungsdioden entfallen.

Gegenüber einer denkbaren Lösung, von vorneherein und über die gesamte Betriebsdauer mit erhöhter Betriebsspannung zu arbeiten, ergibt sich der Vorteil einer Stromersparnis.

Gemäß in Unteransprüchen angegebenen Ausgestaltungen der Erfindung kann die Abgabe des erhöhten Betriebsspannungswertes mit Hilfe eines Schalters gezielt manuell herbeigeführt werden oder aber automatisch erfolgen, wozu ein Sensor zur Erfassung der Bewegung einer neu an die Betriebsspannungsquelle anzuschließenden Baueinheit in ihre Endlage vorgesehen ist, der bei Ansprechen die Abgabe der erhöhten Betriebsspannung veranlaßt. Gemaß einer weiteren Ausgestaltung der Erfindung ist der jeweilige Grad der Erhöhung der Betriebsspannung von der Anzahl der insgesamt von der Betriebsspannung versorgten Baueinheiten abhängig gemacht, womit dem Umstand Rechnung getragen wird, daß mit wachsender Anzahl von Baueinheiten das Zuschalten einer weiteren Baueinheit einen geringeren Einfluß ausübt.

Für einen Betriebszustand, in dem überhaupt noch keine Baueinheit angeschaltet ist, kann vorgesehen sein, die Betriebsspannung gegenüber dem Normalwert abzusenken, was zu einer Verringerung der Verlustleistung fuhrt.

Nachstehend wird die Erfindung anhand eines Ausführungsbeispiels unter Bezugnahme auf eine Zeichnung naher erläutert.

In der Zeichnung zeigen:
Figur 1 eine Schaltungsanordnung der vorstehend angesprochenen bekannten Art,
Figur 2 die erfindungsgemäße Schaltungsanordnung.

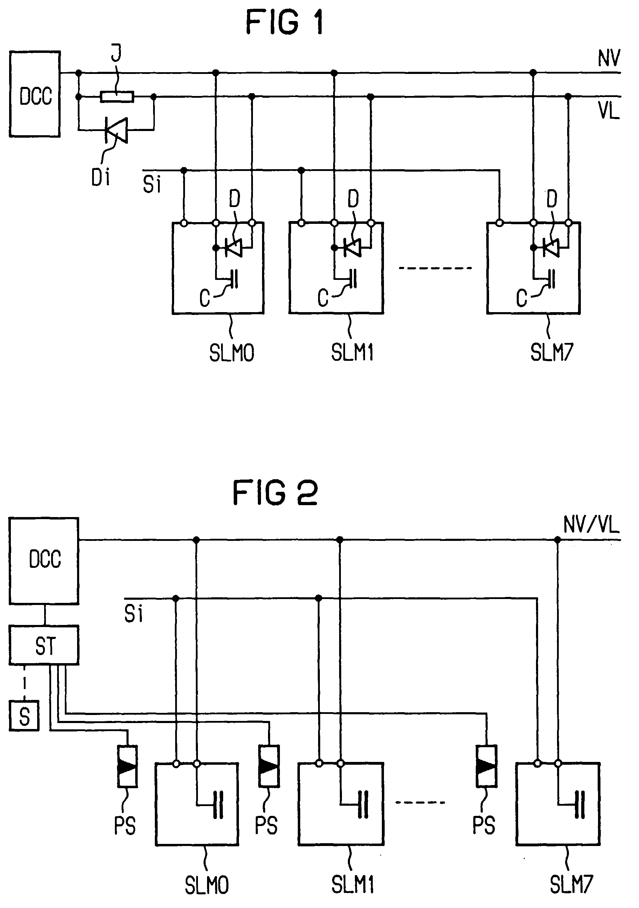

Wie die Figur 1 zeigt, versorgt eine Betriebsspannungsquelle DCC eine Mehrzahl von Baueinheiten SLM0 bis SLM7 gemeinsam mit Betriebsspannung. Die Baueinheiten, bei denen es sich beispielhaft um Teilnehmeranschlußschaltungen eines Fernsprechvermittlungssystems handeln möge, stehen hierzu über Anschlusskontakte p und eine Versorgungsleitung NV mit der Betriebsspannungsquelle DCC in Verbindung. Über die Versorgungsleitung NV wird eine Normalversorgungsspannung geliefert, die 5 V betragen möge.

Über eine Leitung Si und Anschlußkontakte s werden Signalisierungsinformationen zugeführt.Die Kontakte p sind gegebenenfalls voreilend gegenüber den Kontakten s, um sicherzustellen, daß ein Signalisierungsbetrieb erst erfolgen kann, wenn die Betriebsspannung ordnungsgemäß angelegt ist.

Über Kontakte l, bei denen es sich um den Kontakten p gegenüber voreilende Kontakte handelt, und über eine weitere Versorgungsleitung VL kann durch die Betriebsspannungsquelle DCC beim Stecken neuer Baueinheiten bzw. beim Wiederanstecken im Zuge eines Austauschs von Baueinheiten eine Sonderbetriebsspannung mit einem erhöhten Wert geliefert werden, die der Aufladung der Kondensatoren der Baueinheiten, in der Figur durch C symbolisiert, dient.

Die Figur 1 zeigt ferner als Bestandteil der Baueinheiten Dioden D, durch die eine Entkopplung der Sonderspannung von der eigentlichen Normalversorgungsspannung bewirkt wird.

In der zusätzlichen Versorgungsleitung VL ist an zentraler Stelle eine Induktivität I angeordnet, die durch eine Diode Di überbrückt ist. Diese Schaltmittel sollen bewirken, daß der Ladungsstoß beim Kontaktieren der voreilenden Kontakte l relativ klein bleibt.

Wie die Figur 2 zeigt, entfallen bei der erfindungsgemäßen Schaltungsanordnung die zusätzliche Versorgungsleitung mit der eingefügten Induktivität sowie die voreilenden Kontaktstifte der bekannten Schaltungsanordnung. Dafür ist der Versorgungsspannungsquelle eine Steuerung ST zugeordnet, die dafür sorgt, daß die Betriebsspannungsquelle DCC für den Fall des Hinzuschaltens einer weiteren Baueinheit oder des Wiederanschaltens einer Baueinheit nach einem Austausch über die Versorgungsleitung NV/VL anstelle der Normalbetriebsspannung von beispielsweise 5 V eine erhöhte Betriebsspannung von beispielsweise 5,3 V liefert. Diese erhöhte Spannung ist niedrig genug, um von den Bauelementen der Baueinheiten verkraftet zu werden und liegt andererseits soweit über der Normalspannung von 5 V, daß der beim Anschalten von Baueinheiten aufgrund der Aufladung der darin enthaltenen Kondensatoren erfolgende Spannungseinbruch auf z. B 4,6 V nicht zu einem derartig weiten Absinken der Betriebsspannung führt, daß eine Beeinträchtigung des Betriebs der Baueinheiten zu befürchten ist. Der Übergang von der Normalbetriebsspannung zur erhöhten Betriebsspannung erfolgt hierbei so langsam, daß die schon im Betrieb befindlichen Baueinheiten nicht gestört werden.

Die Steuerung ST sorgt ferner dafür, daß nach einer vorgegebenen Zeit, die ausreicht, den Steckvorgang bzw. Anschaltevorgang auszufuhren, die Betriebsspannung wieder auf den Normalwert zurückgenommen wird, was ebenfalls allmählich erfolgt.

Gemäß einer Ausgestaltung der Erfindung kann der Grad der Erhöhung der Betriebsspannung von der Anzahl der schon angeschlossenen Baueinheiten abhängig gemacht werden. Die Erhöhung ist umso geringer, je mehr Baueinheiten schon an die Betriebsspannungsquelle angeschlossen sind. Bei Anschaltung einer allerersten Baueinheit kann die Betriebsspannungserhöhung sogar entfallen.

Den erforderlichen Grad der Erhöhung der Betriebsspannung leitet die Steuerung ST aus dem aktuellen Stromverbrauch der Betriebsspannungsquelle ab.

Das Herbeifuhren der Abgabe einer erhöhten Betriebsspannung kann mittels eines manuell betätigten Schalters S erfolgen.

Es kann jedoch auch vorgesehen sein, mit Hilfe von Sensoren, beispielsweise Photosensoren PS die Bewegung anzuschließender Baueinheiten in ihre Endlage zu erfassen und mit dem entsprechenden Sensorsignal die Betriebspannungeserhöhung auszulösen.

Eine andere Möglichkeit besteht darin, das Auslösen der Betriebsspannungserhöhung vom Einstecken des sogenannten Erdungsbandes abhängig zu machen. Die Verbindung einer Bedienungsperson mit Gestellmasse beim Arbeiten an den Baugruppen mittels eines Erdungsbandes zur Vermeidung von statischen Entladungen ist Forderung einer entsprechenden Arbeitsrichtlinie. Unterbleibt eine solche Verbindung beim Einstecken einer Baugruppe, dann wird es bei der genannten Variante zu einem Spannungseinbruch kommen, und eine sowieso vorhandene Spannungsüberwachung ansprechen mit der Folge eines Rücksetzens der schon gesteckten Baugruppen. Auf diese Weise dient die genannte Erfindungsvariante zusätzlich der Überwachung des ordnungsgemäßen Verhaltens des Betreiberpersonals.

In einem Betriebszustand, in dem überhaupt noch keine Baueinheit angeschaltet ist, kann es zweckmäßig sein, die Betriebsspannung auf einen Wert unterhalb des Normalwerts abzusenken, der aber noch soweit über dem zulässigen Minimalwert liegt, daß dieser bei sonstigen, also nicht mit der Anschaltung von Baueinheiten in Zusammenhang stehenden Spannungsschwankungen nicht erreicht wird. Es laßt sich hierdurch die Verlustleistung verringern.

## Patentansprüche

1. Schaltungsanordnung zur Bereitstellung einer Betriebsspannung für eine Mehrzahl von vorzugsweise steckbaren Baueinheiten aus einer gemeinsamen Betriebsspannungsquelle,
**gekennzeichnet** durch
Schaltmittel zum allmählichen Herbeiführen der Abgabe einer gegenüber dem Normalwert soweit erhöhten Betriebsspannung durch die gemeinsame Betriebsspannungsquelle (DCC), daß der Spannungseinbruch beim Zuschalten einer weiteren Baueinheit (SLM0 bis SLM7) nicht zu einem unterhalb einer Zulässigkeitsgrenze liegenden Wert führt und zum allmählichen Zurückfuhren des erhöhten Betriebsspannungswerts auf den Normalwert nach einer vorgegebenen für das Zuschalten vorgesehenen Zeitspanne.

2. Schaltungsanordnung nach Anspruch 1,
**dadurch gekennzeichnet**, daß zum Herbeiführen der Abgabe des erhöhten Betriebsspannungswerts ein manuell betätigbarer Schalter (S) vorgesehen ist.

3. Schaltungsanordnung nach Anspruch 1,
**dadurch gekennzeichnet**, daß
ein Sensor (PS) zur Erfassung der Bewegung neu an die Betriebsspannungsquelle anzuschhließender Baueinheiten in ihre Endlage vorgesehen ist, der bei Ansprechen die Abgabe der erhöhten Betriebsspannung veranlaßt.

4. Schaltungsanordnung nach Anspruch 1,
**dadurch gekennzeichnet**, daß
das Herbeiführen der erhöhten Betriebsspannung durch das Einstecken eines mit einer Bedienungsperson verbindenden Erdungsbandes an das Gestell, das die Baugruppen enthält, bewirkt wird.

5. Schaltungsanordnung nach einem der vorhergehenden Ansprüche,
**dadurch gekennzeichnet**, daß
der jeweilige Grad der Erhöhung der Betriebsspannung mit wachsender Anzahl der insgesamt von der Betriebsspannung versorgten Baueinheiten (SLM0 bis SLM7) verringert wird.

6. Schaltungsanordnung nach einem der vorhergehenden Ansprüche,
**dadurch gekennzeichnet**, daß
in einem Betriebszustand, in dem noch keine der Baueinheiten (SLM0 bis SLM7) angeschaltet ist, die Betriebsspannung gegenüber dem Normalwert abgesenkt ist.
